Europäisches Patentamt

European Patent Office

Office européen des brevets

(11) Veröffentlichungsnummer: **0 116 904**
**B1**

(12) **EUROPÄISCHE PATENTSCHRIFT**

(45) Veröffentlichungstag der Patentschrift:
04.01.89

(21) Anmeldenummer: 84101321.2

(22) Anmeldetag: 09.02.84

(51) Int. Cl.⁴: **G 05 D 3/10, G 05 B 19/40,**
**B 60 K 26/04, B 60 H 1/00**

(54) **Antriebsvorrichtung für eine Klappe in Kraftfahrzeugen.**

(30) Priorität: 18.02.83 DE 3305725

(43) Veröffentlichungstag der Anmeldung:
29.08.84 Patentblatt 84/35

(45) Bekanntmachung des Hinweises auf die Patenterteilung:
04.01.89 Patentblatt 89/1

(84) Benannte Vertragsstaaten:
DE FR GB IT SE

(56) Entgegenhaltungen:
DE-A-2 946 328
DE-A-3 025 761
GB-A-2 072 379

Georg Breck, Technik der Automatisierungsgeräte,
2. Auflage, 1972, Carl Hanser Verlag München,
Seiten 283, 284, 293, 294

(73) Patentinhaber: **BAYERISCHE MOTOREN WERKE**
**Aktiengesellschaft, Postfach 40 02 40 Petuelring**
**130 - AJ- 36, D-8000 München 40 (DE)**

(72) Erfinder: **Rathgeber, Gerhard, Dipl.- Ing.,**
**Möwenstrasse 15, D-8011 Pliening (DE)**

(74) Vertreter: **Bullwein, Fritz, Bayerische Motoren**
**Werke Aktiengesellschaft Postfach 40 02 40**
**Petuelring 130 AJ- 33, D-8000 München 40 (DE)**

EP 0 116 904 B1

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

**Beschreibung**

Die Erfindung bezieht sich auf eine Antriebsvorrichtung nach dem Oberbegriff des Patentanspruchs 1.

Eine derartige Antriebsvorrichtung ist aus der DE-3 025 761 bekannt. Dabei wird als spezieller Anwendungsfall eine Drosselklappe einer Brennkraftmaschine verstellt. Besondere Mittel, um die Iststellung der Klappe in Übereinstimmung mit der Sollstellung zu bringen, sind dabei nicht vorgesehen. Dies gilt sowohl für den Beginn einer Betriebsphase als auch für den laufenden Betrieb. Bei letzterem tritt insbesondere das Problem des sog. Schrittverlusts auf. Darunter ist der Nachteil von Schrittmotoren zu verstehen, daß bei einer zu hohen Start-/Stopfrequenz, bei Störimpulsen oder bei mechanischer Überlastung Schritte verloren gehen können.

Darüberhinaus besteht bei Schrittmotoren das Problem, die jeweilige Iststellung bereits zu Beginn einer Betriebsphase in Übereinstimmung mit der gewünschten Sollstellung zu bringen. Im Ruhezustand kann es nämlich zu einer Dejustierung der Klappe kommen, die dann zu Beginn einer Betriebsphase vorliegt und, sofern sie nicht behoben wird, zu einer erheblich gestörten Funktion der Antriebsvorrichtung führt.

Der Erfindung liegt die Aufgabe zugrunde, eine Antriebsvorrichtung der eingangs genannten Art zu schaffen, die die besonders bei Schrittmotoren zum Antrieb von Klappen vorkommenden Dejustageprobleme während des gesamten Betriebs beseitigt.

Die Erfindung löst diese Aufgabe durch die kennzeichnenden Merkmale des Patentanspruchs 1.

Damit werden Probleme zu Beginn einer Betriebsphase als auch während der Betriebsphase wirksam beseitigt. Durch die Justierung in jeder der beiden Endstellungen wird das Auftreten größerer Schrittverluste vermieden bzw. werden auftretende Schrittverluste umgehend kompensiert.

Zwar sind bei Schrittmotoren Synchronisationsverfahren ganz allgemein bekannt. Hier zu nennen ist die DE-2 946 328 und die GB-2 072 379 bei denen Schrittmotor-Antriebe für den Zeiger eines Zeigerinstruments bzw. für die Luftklappe einer Klimaanlage an einer definierten Endstellung des bewegten Teiles justiert werden. Im Falle der DE-2 946 328 geschieht dies willkürlich oder jedesmal dann, wenn eine entsprechende Eingangsinformation für die Sollstellung vorliegt, bei der GB-2 072 379 unmittelbar vor jeder Einstellung des Teiles in der Iststellung entsprechend der jeweils geänderten Sollstellung.

Durch eine Weiterbildung der Erfindung soll ein weiteres Problem, das mit der Verwendung eines Schrittmotores verbunden sein kann, gelöst werden. Es ist möglich, die Einstellung der Klappe in den Ruhephasen mit Hilfe eines Speichers festzuhalten. Ein derartiger Speicher bedingt eine Stromversorgung gerade in diesen Ruhephasen des Kraftfahrzeugs. Diesem Nachteil kann dadurch begegnet werden, daß ein derartiger Speicher in den Ruhephasen nicht wirksam ist und die erste Einstellung der Klappe nach einer derartigen Ruhephase in der Weise vorgenommen wird, daß der Motor zunächst in eine Endstellung und die gewünschte Sollstellung von dieser Endstellung aus eingestellt ist. Zwar ist diese Maßnahme im Prinzip aus der DE-OS-3 107 442 für eine Gebäude-Heiz-/ bzw. Klimaanlage bekannt. Jedoch wird diese Maßnahme bei jeder Veränderung der Einstellung der Klappe auch während einer laufenden Betriebsphase durchgeführt. Dies ist für ein Kraftfahrzeug völlig unbrauchbar, da beispielsweise bei Ausbildung der Klappe als Drosselklappe vor jeder Stellungsänderung die Einstellung der Klappe auf Leerlauf- bzw. Vollgasbetrieb durchzuführen wäre.

Diese einmalige Justierung der Klappe zu Beginn einer Betriebsphase kann auf verschiedene Weise vorgenommen werden. So kann die einzustellende Endstellung als eine der beiden möglichen Endstellungen vorgegeben sein. Demgegenüber ergibt sich eine wesentlich schnellere Justierung in der Weise, daß jeweils die Endstellung gewählt wird, die der gewünschten Sollstellung am nächsten ist.

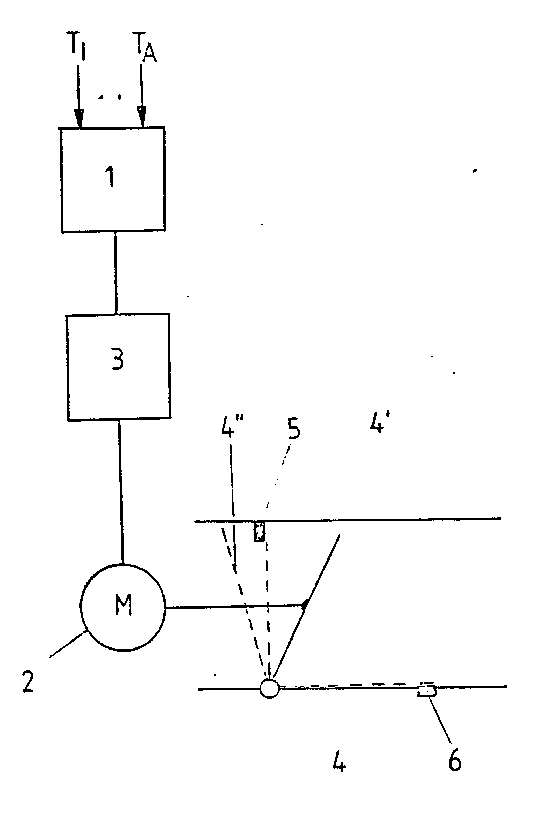

In der Zeichnung ist das Prinzip der Erfindung anhand einer Antriebsvorrichtung für die Steuerklappe einer Heiz-/Klimaanlage dargestellt.

Die Anlage enthält ein Steuergerät 1, das aufgrund der eingehenden Parameter, wie z. B. Temperaturen von Innen- und Außenluft und des gewählten Programms Stellgrößen für die Stellglieder der Anlage berechnet. Eines der Stellglieder ist ein Schrittmotor 2, der am Steuergerät 1 über einen Schrittgeber 3 angeschlossen ist. Der Schrittmotor 2 steuert eine Luftklappe 4, die beispielsweise mit der Atmosphäre verbunden ist und den Frischlufteintritt in das Fahrzeuginnere steuert. Der Schrittgeber 3 stellt die Luftklappe mit Hilfe des Schrittmotors 2 zwischen zwei, durch Anschläge 5 und 6 restgelegten Endstellungen in beispielsweise einhundert gleichmäßigen Schritten ein und durchfährt damit den gesamten, annähernd 90° betragenden Verstellwinkel der Luftklappe 4.

Das Einstellen der Luftklappe 4 außerhalb der durch die Anschläge 5 und 6 gegebenen Endstellungen erfolgt während einer Betriebsperiode des Kraftfahrzeugs in üblicher Weise. Entsprechend der erforderlichen Änderung der Einstellung der Luftklappe 4 wird der Schrittmotor 2 durch das Steuergerät 1 gesteuert und den Schrittgeber 3 umgesetzt mit einer entsprechenden Anzahl von Vor- bzw. Rückschritten beaufschlagt. Lediglich zu Beginn der Betriebsperiode, bei dem die eingestellte Position der Luftklappe 4 nicht gespeichert vorliegt, wird die gewünschte Einstellung der Luftklappe 4 in der Weise vorgenommen, daß - durch das Steuergerät 1 veranlaßt - der Schrittmotor 2 die Luftklappe 4 zunächst in eine der durch die Anschläge 5 bzw. 6 gegebenen Endstellungen bringt und von dieser aus die gewünschte Stellung anfährt. Dabei wird die Endstellung gewählt, die dieser Sollstellung der Luftklappe 4 am nächsten liegt, d.h. im vorliegenden Fall mit maximal fünfzig Schritten zu erreichen ist. Das anfängliche Einstellen der Endstellung geschieht in der Weise, daß der Schrittmotor 2 mit einer Zahl von Schritten in der gewünschten Bewegungsrichtung der Luftklappe 4 beaufschlagt wird, die mindestens gleich der gesamten Schrittzahl zum Durchlaufen des Stellbereichs der Luftklappe 4, im vorliegenden Fall einhundert Schritte, ist.

Um den während einer Betriebsperiode, durch das Fehlen eines Stellungsgebers für die Luftklappe 4 bedingten möglichen Verlust von Schritten zu kompensieren, wird bei jedem Einstellen der Luftklappe 4 in den durch die Anschläge 5 und 6 gegebenen Endstellungen, also auch bei der oben beschriebenen anfänglichen Einstellung, eine Schrittzahl in den Schrittmotor 2 eingegeben, die größer als die bei fehlerfreiem Arbeiten der Antriebsvorrichtung erforderliche Schrittzahl ist. Bei Fehlen der Anschläge 5 bzw. 6 hätte dies bei diesem fehlerfreiem Arbeiten zur Folge, daß die Luftklappe 4 über die Endstellung hinaus eingestellt werden würde. Beispielsweise würde sie statt der eingezeichneten, durch den Anschlag 5 gegebenen Stellung 4' dann die Stellung 4'' einnehmen. Der Anschlag 5 verhindert dies, während der Aufbau und die Wirkungsweise eines Schrittmotors so gewählt werden können, daß dieses tatsächliche Nicht-Ausführen von Bewegungsschritten der Luftklappe 4 keine die Funktionstüchtigkeit der Luftklappe 4 bzw. ihrer mechanischen Verbindung mit dem Schrittmotor 2 beeinträchtigende übermäßige mechanische Beanspruchung zur Folge hat.

Ohne einen außerhalb der Betriebsphasen wirksamen Speicher und einen in den Betriebsphasen wirksamen Geber für die Ist-Stellung der Luftklappe ergibt sich somit stets eine präzise Einstellung der Luftklappe, da zu Beginn einer Betriebsphase eine Selbstjustierung vorgenommen wird und Schrittfehler während einer Betriebsphase stets korrigiert werden. Dies bietet auch den Vorteil einer Montageerleichterung, da nicht auf die Grund-Einstellung der Luftklappe 4 und des Schrittmotors 2 geachtet werden muß.

**Patentansprüche**

1. Antriebsvorrichtung für eine Klappe (4) in Kraftfahrzeugen mit einem elektrischen Schrittmotor (2), der von einem einen Speicher enthaltenden Steuergerät (1) gesteuert ist und der die Klappe (4) zwischen zwei durch Anschläge (5, 6) festgelegten Endstellungen in wählbaren Sollstellungen entsprechend einem in einer Anzahl von Schritten zur Bewegung der Klappe in Vorwärts- oder Rückwärtsrichtung gegebenen Stellbefehl einstellt, wobei die jeweilige Sollstellung im Speicher festgehalten ist, dadurch gekennzeichnet, daß das Steuergerät (1) folgende Merkmale aufweist:

a) Zu Beginn einer Betriebsphase beaufschlagt das Steuergerät (1) den Schrittmotor (2) unabhängig von der eingestellten Position der Klappe (4) mit einer maximalen Schrittzahl, welche für das Erreichen einer der Endstellungen der Klappe (4) hinreichend ist;

b) Bei jedem weiteren Einstellen der Klappe (4) in jeder der Endstellungen (5, 6) beaufschlagt das Steuergerät (1) den Schrittmotor (2) zusätzlich zu den hierzu erforderlichen Schritten mit weiteren Schritten in der Bewegungsrichtung der Klappe (4), um durch diese Überschrittzahl die jeweilige Endstellung der Klappe (4) sicher zu erreichen und eventuelle Schrittverluste des Schrittmotors (2) auszugleichen.

2. Antriebsvorrichtung nach Anspruch 1, dadurch gekennzeichnet, daß die zu Beginn einer Betriebsphase eingestellte Endstellung der ersten einzustellenden Sollstellung am nächsten liegt.

**Claims**

1. A drive device for a valve (4) in motor vehicles comprising an electric stepping motor (2) which is controlled by a control device (1) containing a store and which sets the valve (4) in adjustable positions between two end positions defined by abutments (5, 6) in dependence on an adjustment instruction given in a number of steps for moving the valve in the forward or reverse direction, the respective set position being retained in the store, characterised in that the control device (1) has the following features:

(a) at the beginning of an operating phase the control device (1) actuates the stepping motor (2) independently of the set position of the valve (4) and with a maximum number of steps adequate for reaching one of the end positions of the valve (4);

(b) at each subsequent adjustment of the valve (4) in each of the end positions (5, 6) the control device (1) actuates the stepping motor (2) with steps in addition to the steps required for this purpose, the additional steps being in the direction of motion of the valve (4), in order by means of this excess number of steps to ensure the respective end position of the valve (4) and compensate any losses of steps of the stepping motor (2).

2. A drive device according to claim 1, characterised in that the end position adjusted at the beginning of an operating phase lies nearest the first position to be set.

## Revendications

1. Dispositif d'entraînement pour un clapet (4) dans des véhicules automobiles, dispositif comportant un moteur électrique pas à pas (2) qui est commandé par un appareil de commande (1) comprenant une mémoire, et qui règle le clapet (4) entre deux positions terminales déterminées par des butées (5, 6), dans des positions de consigne susceptibles d'être selectionnées de façon correspondante à un ordre de réglage donné sous la forme d'un certain nombre de pas pour déplacer le clapet vers l'avant ou vers l'arrière, la position de consigne respective étant conservée en mémoire, dispositif caractérisé en ce que l'appareil de commande (1) comporte les particularités suivantes:

a) au début d'une phase de fonctionnement, l'appareil de commande (1) alimente le moteur pas à pas (2) indépendamment de la position réglée du clapet (4) avec un nombre de pas maximal, qui est suffisant pour atteindre une des positions terminales du clapet (4),

b) pour chaque réglage suivant du clapet (4) dans chacune des positions terminales (5, 6) l'appareil de commande (1) alimente le moteur pas à pas (2), en supplément aux pas nécessaires à cet effet, avec d'autres pas dans le sens de déplacement du clapet (4) pour, grâce à ce nombre de pas supplémentaires, atteindre de façon certaine la position terminale respective du clapet (4) et compenser d'éventuelles pertes de pas du moteur pas à pas (2).

2. Dispositif d'entraînement selon la revendication 1, caractérisé en ce que la position terminale réglée au début d'une phase de fonctionnement se situe au plus près de la première position de consigne à régler.

$T_I$ $T_A$